(19) Europäisches Patentamt
European Patent Office
Office européen des brevets

(11) EP 4 190 853 A1

(12) # EUROPEAN PATENT APPLICATION
published in accordance with Art. 153(4) EPC

(43) Date of publication:
**07.06.2023 Bulletin 2023/23**

(21) Application number: **21852439.5**

(22) Date of filing: **27.07.2021**

(51) International Patent Classification (IPC):
***C08K 5/521*** (2006.01) ***C08L 81/06*** (2006.01)
***C08L 101/12*** (2006.01) ***C08J 9/04*** (2006.01)
***C08L 71/08*** (2006.01) ***H01B 13/14*** (2006.01)
***H01B 7/02*** (2006.01)

(52) Cooperative Patent Classification (CPC):
**C08J 5/00; C08J 9/04; C08K 5/521; C08L 71/08; C08L 81/02; C08L 81/06; C08L 101/00; C08L 101/12; H01B 7/02; H01B 13/14**

(86) International application number:
**PCT/JP2021/027647**

(87) International publication number:
**WO 2022/030293 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.08.2020 JP 2020132040**

(71) Applicant: **Daikin Industries, Ltd.**
**Osaka-shi, Osaka 530-8323 (JP)**

(72) Inventors:
- **KOUNO, Hideki**
  **Osaka-shi, Osaka 530-8323 (JP)**
- **ISHII, Kenji**
  **Osaka-shi, Osaka 530-8323 (JP)**
- **TOKUDA, Masato**
  **Osaka-shi, Osaka 530-8323 (JP)**
- **KITAHARA, Takahiro**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(54) **FOAM MOLDING COMPOSITION, FOAMED MOLDED BODY, ELECTRIC WIRE, METHOD FOR MANUFACTURING FOAMED MOLDED BODY, AND METHOD FOR MANUFACTURING ELECTRIC WIRE**

(57) An object of the present disclosure is to provide a foam molding composition from which there can be produced a foam molded body and a foamed electric wire which are excellent in the heat resistance, small in the average cell size, high in the foaming ratio, and good in the outer diameter stability. The foam molding composition including a resin (A) having a pyrolysis temperature of 330°C or higher and at least one compound (B) selected from the group consisting of phosphoric acid esters and salts thereof and phosphoric acid ester complex compounds.



Processed by Luminess, 75001 PARIS (FR)

## Description

### Technical Field

The present disclosure relates to a foam molding composition, a foam molded body, an electric wire, a method for producing a foam molded body and a method for producing an electric wire.

### Background Art

For covering materials of electric wires, reduction of the dielectric constant is desired in order to improve the electric characteristics, and for the reduction of the dielectric constant, making the covering materials to be foams is effective. The foams using a resin as their materials are obtained usually by foam molding in which the resin melted is molded in the state that gas is made to be present in the resin.

It is preferable that cells in the foam are fine and homogeneously distributed, in order to make the shape and characteristics of the foam obtained to be uniform. For the purpose of micronization and distribution uniformization of the cells, there is a method of making a foam nucleating agent to be present in the resin so as to make a starting point to generate the cells during foam molding.

For example, Patent Literature 1 discloses a foam nucleating agent which contains at least one compound selected from the group consisting of phosphate complex compounds (a-1) and phosphorus-based ester compounds (a-2), and has an average particle size of 0.01 μm to 300 μm, and a composition for a foam, which contains the foam nucleating agent and a resin component (B) being at least one component selected from the group consisting of elastomers (b-1) and thermoplastic resins (b-2).

For such foam molding compositions, further heat resistance, flame retardancy and the like have been demanded and utilization of resins called super engineering plastics, remarkably high in functionalities, has been studied.

The resins classified as super engineering plastics, however, though being excellent in heat resistance, have a problem of being relatively high in the dielectric constant.

Patent Literature 2 discloses an insulated electric wire which has a conductor and a foamed insulator formed on the circumference of the conductor and having a foamed region, wherein the foamed insulator is composed of a resin composition containing a polyphenylene sulfide resin and alumina, and the foaming degree of the foamed insulator is 30% or higher and 80% or lower.

Then, Patent Literature 3 discloses a foamed electric wire which has a conductor and a foamed insulating layer, wherein the foamed insulating layer is composed of a thermoplastic resin in which the melting point of a crystalline thermoplastic resin or the glass transition point of a noncrystalline thermoplastic resin is 150°C or higher, and has an average cell size of 5 μm or smaller.

Patent Literature 4 discloses a composition for a wallpaper which is made by adding a foaming agent and an aromatic cyclic phosphoric acid ester salt having a specific structure as a foam nucleating agent to a thermoplastic elastomer.

### Citation List

#### Patent Literature

Patent Literature 1: Japanese Patent Laid-Open No. 2013-147566
Patent Literature 2: Japanese Patent Laid-Open No. 2017-157463
Patent Literature 3: International Publication No. WO 2011/118717
Patent Literature 4: Japanese Patent Laid-Open No. 11-130892

### Summary of Invention

#### Technical Problem

An object of the present disclosure is to provide a foam molding composition from which there can be produced a foam molded body and a foamed electric wire which are excellent in the heat resistance, small in the average cell size, high in the foaming ratio, and little in generation of sparks.

Solution to Problem

The present disclosure relates to a foam molding composition which comprises a resin (A) having a pyrolysis temperature of 330°C or higher and at least one compound (B) selected from the group consisting of phosphoric acid esters and salts thereof and phosphoric acid ester complex compounds.
It is preferable that the resin (A) has a dielectric constant of 4.0 or lower.
It is preferable that the resin (A) is capable of being melt processed.
It is preferable that the resin (A) has a melting point of 250°C or higher.
It is preferable that the resin (A) is at least one selected from the group consisting of polyphenylene sulfide (PPS) and polyaryl ether ketone (PAEK).
It is preferable that the compound (B) has a melting point of 300°C or higher.
It is preferable that the compound (B) is an aromatic cyclic phosphoric acid ester salt represented by the following formula (1).

[Formula 1]

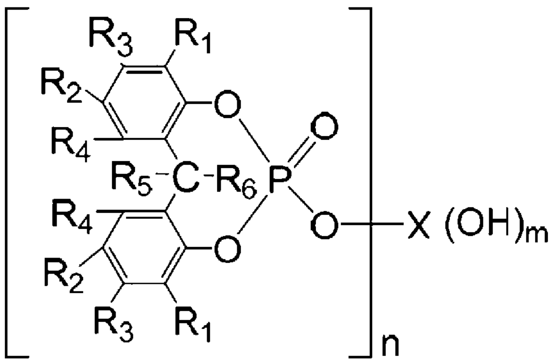

(1)

In the formula, $R^1$, $R^2$, $R^3$ and $R^4$ each represent a hydrogen atom, an alkyl group or cycloalkyl group having 1 to 8 carbon atoms, or an aryl group, alkylaryl group or arylalkyl group having 6 to 12 carbon atoms; $R^5$ and $R^6$ each represent a hydrogen atom or a methyl group; n represents an integer of 1 or 2; m represents an integer of 0 to 2; and X represents a m+n-valent metal.
It is preferable that $R^1$ and $R^2$ in the above formula (1) are a t-butyl group.
It is preferable that X in the above formula (1) is sodium.
It is preferable that the above compound (B) is 2,2'-methylenebis(4,6-di-t-butylphenyl) sodium phosphate.
The present disclosure is also a foam molded body characterized in being obtained from the above-mentioned foam molding composition.
It is preferable that the foam molded body has a foaming ratio of 10% or higher.
The present disclosure is also an electric wire characterized in comprising a core wire and a covering material covering the core wire and obtained from the above-mentioned foam molding composition.
It is preferable that the covering material of the electric wire has a foaming ratio of 10% or higher.
The present disclosure is also a method for producing a foam molded body, characterized in comprising foam molding the above-mentioned foam molding composition.
The present disclosure is also a method for producing an electric wire, characterized in comprising covering a core wire with the above-mentioned foam molding composition to obtain the electric wire.

Advantageous Effects of Invention

The foam molding composition of the present disclosure having the above constitution enables to produce a foam molded body and a foamed electric wire which are high in the foaming ratio, small in the average cell size, little in generation of sparks, low in variations in the outer diameter and the electrostatic capacity and smooth in the surface.

Description of Embodiments

Conventionally, in the case of using a functional plastic, which has a high melting point and needs a high molding

temperature, represented by a super engineering plastic, for a foam molding composition, there has been used a physical foaming agent such as an inert gas or a chemical foaming agent which is pyrolyzed at the molding temperature. In order to further raise the foaming ratio, concurrent use of a foam nucleating agent is conceivable. The present disclosure has been completed by having found that use of the above-mentioned compound (B) as a foam nucleating agent enables a good foaming performance to be obtained.

Further when the compound (B) has a melting point of 300°C or higher, the performance effect becomes remarkable.

Since the molding temperature of the above-mentioned functional plastic is high, when a general-purpose foam nucleating agent is blended, the foam nucleating agent ends in melting during molding and poses difficulty with the effective action. When as the compound (B), one having a melting point of 300°C or higher is used, such a problem is more suitably solved.

Hereinafter, the present disclosure will be described in detail.

The resin (A) in the present disclosure has a pyrolysis temperature of 330°C or higher. Since the resin (A) has a high pyrolysis temperature as described above, the foam molding composition of the present disclosure can have high heat resistance and excellent mechanical characteristics. The pyrolysis temperature is preferably 350°C or higher and more preferably 400°C or higher.

In the present description, the pyrolysis temperature is a 1%-weight loss temperature when heated in air at 10°C/min in TG (heat weight change measurement).

Further, it is preferable that the dielectric constant of the resin (A) is 4.0 or lower, in order to make low the signal loss of a communication electric wire. The dielectric constant is more preferably 3.8 or lower and still more preferably 3.5 or lower.

The dielectric constant is measured by a cavity resonator method at a frequency of 6 GHz.

It is desirable that the melting point of the resin (A) is 200°C or higher or the molding temperature thereof is 250°C or higher, since there can be obtained a foam molded body excellent in heat resistance and having a wide continuous use temperature range from the resin (A). Further, it is more preferable that the melting point is 250°C or higher or the molding temperature is 300°C or higher.

In the present description, the melting point is a temperature measured by a differential scanning calorimeter (DSC); the molding temperature is a usually recommended temperature suitable for molding, and the temperature at which the resin (A) has flowability and no resin deterioration such as coloring occurs; and "having flowability" means that the MFR at the temperature is 0.0001 or higher.

The melt flow rate (MFR) of the resin (A) as measured under the condition of 380°C and a load of 5,000 g is preferably 1 to 150 g/10 min, more preferably 5 to 130

g/10 min and still more preferably 10 to 100

g/10 min. Due to that the MFR is in the above range, the electric wire extruding stability is improved and an insulating layer having a high percentage of tensile elongation can be obtained. The MFR of the above aromatic polyether ketone resin is measured by using a melt indexer according to ASTM D1238.

The resin (A) is preferably a melt processable one. The resin (A) specifically includes polyaryl ether ketones (PAEK)(more specifically, for example, polyether ether ketone (PEEK), polyether ketone ketone (PEKK), polyether ketone (PEK) and polyether ether ketone ketone (PEEKK)), polyphenylene sulfide (PPS), polyether sulfone (PES), liquid crystal polymers (LCP), polysulfone (PSF), noncrystalline polyarylate (PAR), polyether nitrile (PEN), thermoplastic polyimide (TPI), polyimide (PI), polyether imide (PEI), polyamideimide (PAI) and fluororesins.

Among these, the resin (A) is preferably at least one selected from the group consisting of liquid crystal polymers (LCP), polyphenylene sulfide (PPS), polyether sulfone (PES) and polyaryl ether ketone (PAEK), and especially preferably at least one selected from the group consisting of polyphenylene sulfide (PPS) and polyaryl ether ketone (PAEK).

The resin (A) can be used in one kind or in two or more kinds.

Among these, by using an aromatic polyether ketone resin called polyaryl ether ketone (PAEK), the thin wall processability is improved and a foam molded body having a high percentage of tensile elongation can be made.

The aromatic polyether ketone resin is not limited as long as containing a repeating unit constituted of an arylene group, an ether group [-O-] and a carbonyl group [-C(=O)-], and contains, for example, a repeating unit represented by any of the following formulae (a1) to (a5) .

[-Ar-O-Ar-C(=O)-] ··· (a1)

[-Ar-O-Ar-C(=O)-Ar-C(=O)-] ··· (a2)

[-Ar-O-Ar-O-Ar-C(=O)-] ··· (a3)

[-Ar-O-Ar-C(=O)-Ar-O-Ar-C(=O)-Ar-C(=O)-] ··· (a4)

[-Ar-O-Ar-O-Ar-C(=O)-Ar-C(=O)-] ··· (a5)

wherein Ar represents a divalent aromatic hydrocarbon ring group optionally having a substituent.

Examples of the divalent aromatic hydrocarbon ring group represented by Ar include arylene groups having 6 to 10 carbon atoms, such as a phenylene group (o-, m- or p-phenylene group) and a naphthylene group, biarylene groups (each arylene group has 6 to 10 carbon atoms), such as a biphenylene group (2,2'-bipheylene group, 3,3'-biphenylene group, 4,4'-biphenylene group or the like), and terarylene groups (each arylene group has 6 to 10 carbon atoms), such as an o-, m- or p-terphenylene group. These aromatic hydrocarbon ring groups optionally have a substituent, for example, a halogen atom, an alkyl group (a linear or branched chain alkyl group having 1 to 4 carbon atoms, such as a methyl group), a haloalkyl group, a hydroxyl group, an alkoxy group (a linear or branched chain alkoxy group having 1 to 4 carbon atoms, such as a methoxy group), a mercapto group, an alkylthio group, a carboxyl group, a sulfo group, an amino group, an N-substituted amino group or a cyano group. Then, in the repeating units (a1) to (a5), the kind of each Ar may be identical to each other, or may be different from each other. A preferable Ar is a phenylene group (for example, p-phenylene group), or a biphenylene group (for example, a 4,4'-biphenylene group).

Examples of resins having the repeating unit (a1) include polyether ketone (for example, "PEEK-HT", manufactured by Victrex pic). Examples of resins having the repeating unit (a2) include polyether ketone ketone (for example, "PEKK", manufactured by Arkema+Oxford Performance Material Co.). Examples of resins having the repeating unit (a3) include polyether ether ketone (for example, "VICTREX PEEK", manufactured by Victrex plc, "Vestakeep(R)", manufactured by Evonik Degussa GmbH, "Vestakeep-J", manufactured by Daicel-Evonik Ltd.), "KetaSpire(R)", manufactured by Solvay Specialty Polymers USA, LLC), and polyether-diphenyl-ether-phenyl-ketone-phenyl (for example, "Kadel(R)", manufactured by Solvay Specialty Polymers USA, LLC). Examples of resins having the repeating unit (a4) include polyether ketone ether ketone ketone (for example, "VITREX ST", manufactured by Victrex pic). Examples of resins having the repeating unit (a5) include polyether ether ketone ketone. In the repeating unit constituted of an arylene group, an ether group and a carbonyl group, the proportion of an ether segment (E) and a ketone segment (K) is, for example, E/K = 0.5 to 3, preferably about 0.5 to 2.0. Since the ether segment imparts flexibility to a molecular chain and the ketone segment imparts rigidity to the molecular chain, the more the ether segment, the higher the crystallization rate and the higher the degree of crystallinity finally reachable; the more the ketone segment, the glass transition temperature and the melting point are likely to become higher. These aromatic polyether ketone resins can be used singly or in a combination of two or more.

Among these aromatic polyether ketone resins, an aromatic polyether ketone resin having any of the repeating units (a1) to (a4) is preferable. It is preferable that, for example, the aromatic polyether ketone resin is at least one resin selected from the group consisting of polyether ketone, polyether ether ketone, polyether ketone ketone and polyether ketone ether ketone ketone. It is more preferable that the aromatic polyether ketone resin is at least one resin selected from the group consisting of polyether ketone, polyether ether ketone and polyether ketone ketone. Polyether ketone ketone is especially preferable due to that the electric wire processability is improved and the dielectric constant is low.

The melting point of the aromatic polyether ketone resin is preferably 300°C or higher, and more preferably 320°C or higher. Due to that the melting point is in the above range, the heat resistance of a molded article to be obtained can be improved.

The glass transition temperature (Tg) of the aromatic polyether ketone resin is preferably 130°C or higher, and more preferably 135°C or higher and still more preferably 140°C or higher. Due to that the glass transition temperature is in the above range, an insulated electric wire excellent in the heat resistance can be obtained. The upper limit of the glass transition temperature is not limited, but is, from the viewpoint of the moldability, preferably 220°C or lower and more preferably 180°C or lower.

The glass transition temperature is measured according to JIS K7121 by using a differential scanning calorimetry (DSC) device under the measurement condition of a temperature-increasing rate of 20°C/min.

The content of the resin (A) is, with respect to 100 parts by mass of the foam molding composition, preferably 50 parts by mass or higher, more preferably 80 parts by mass or higher, still more preferably 90 parts by mass or higher, further still more preferably 95 parts by mass or higher and especially preferably 98 parts by mass or higher. The upper limit is 99.999 parts by mass or lower and more preferably 99.99 parts by mass or lower.

The compound (B) acting as a foam nucleating agent in the present disclosure is at least one compound selected from the group consisting of phosphoric acid esters and salts thereof, and phosphoric acid ester complex compounds.

In order to effectively exhibit the advantageous effects of the present disclosure, it is desirable that the compound (B) is not melted at the molding temperature. Hence, it is desirable that the melting point of the compound (B) is 300°C or higher. Being 350°C or higher is more preferable and being 400°C or higher is most preferable.

A phosphoric acid ester compound usable as the compound (B) is representatively a phosphoric acid ester, a

phosphorous acid ester, an acidic phosphate ester, an acidic phosphite ester or a salt thereof with ammonia, an amine, melamine, an alkali metal, an alkaline earth metal or the like, and the specific structure thereof is not limited.

Specific examples thereof include acidic phosphate esters or acidic phosphite esters, such as triphenyl phosphate, trilauryl phosphate, tristearyl phosphate, trioleyl phosphate, xylene diphenyl phosphate, ethyl diphenyl phosphate, isopropyl diphenyl phosphate, n-butyl diphenyl phosphate, 2-ethylhexyl diphenyl phosphate, isodecyl diphenyl phosphate, cetyl diphenyl phosphate, stearyl diphenyl phosphate, oleyl diphenyl phosphate, butyl dicresyl phosphate, octyl dicresyl phosphate, lauryl dicresyl phosphate, dibutyl pyrophosphate, monophenyl acid phosphate, diphenyl acid phosphate, monocresyl acid phosphate, dicresyl acid phosphate, monoxylenyl acid phosphate, 2-acryloyloxyethyl acid phosphate, 2-methacryloyloxyethyl acid phosphate, diphenyl (2-acryloyloxyethyl) phosphate, diphenyl (2-methacryloyloxyethyl) phosphate, trinaphthyl phosphate, trinonylphenyl phosphate, tris(2,6-dimethylphenyl) phosphate, tetraphenyl resorcinol diphosphate, tetraphenyl hydroquinone diphosphate, tetraphenyl bisphenol A diphosphate, tetra(2,6-dimethylphenyl) resorcinol diphosphate, tetra(2,6-dimethylphenyl) bisphenol A diphosphate, tetra(2,6-dimethylphenyl) biphenyl diphosphate, tetraphenylethylene glycol diphosphate, bis(2,6-dimethylphenyl) pentaerythritol diphosphate and dixylenyl acid phosphate, and salts of acidic phosphate esters or acidic phosphite esters with ammonia, an amine, a melamine, an alkali metal or an alkaline earth metal, such as ammonium salts of dimethyl phosphate, diethyl phosphate, ethyl phosphate and di-n-butyl phosphate, a triethanolamine salt of dibutoxyethyl phosphate, a morpholine salt of dioctyl phosphate, soda salts of mono-n-butyl phosphate, an ammonium salt of diphenyl phosphate, a melamine salt of diphenyl phosphate, a piperazine salt of diphenyl phosphate, ammonium salts of phenyl phosphate, an ethylenediamine salt of dicresyl phosphate, soda salts of cresyl phosphate and a melamine salt of dixylenyl phosphate.

More specific examples thereof include salts of phosphoric acid esters, such as bis(4-t-butylphenyl) sodium phosphate and 2,2-methylenebis(4,6-di-t-butylphenyl) sodium phosphate, and a sodium salt of (2-hydroxy-2-oxo-4,6,10,12-tetra-t-butyl-1,3,2-dibenzo[d,g]perhydrodioxaphosphocin. Then, the ester may be a mono-ester, a di-ester, a tri-ester or a more polyester. These may be used singly in one kind or in a combination of two or more kinds.

Above all, aromatic phosphoric acid esters are preferable; salts of aromatic phosphoric acid esters are more preferable; and salts of aromatic phosphoric acid esters having a cyclic structure are still more preferable.

As the salts of aromatic phosphoric acid esters having the cyclic structure, aromatic cyclic phosphoric acid salts represented by the following formula (1) are especially preferable.

[Formula 2]

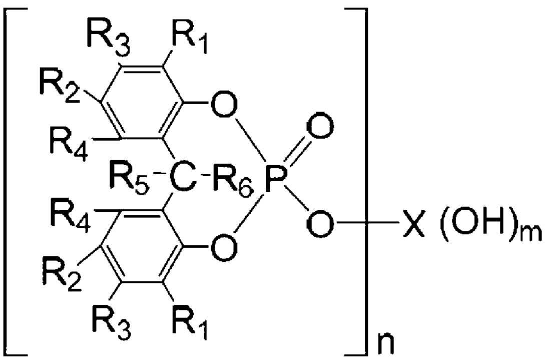

(1)

In the formula, $R^1$, $R^2$, $R^3$ and $R^4$ each represent a hydrogen atom, an alkyl group or cycloalkyl group having 1 to 8 carbon atoms, or an aryl group, alkylaryl group or arylalkyl group having 6 to 12 carbon atoms; $R^5$ and $R^6$ each represent a hydrogen atom or a methyl group; n represents an integer of 1 or 2; m represents an integer of 0 to 2; and X represents a m+n-valent metal.

Examples of the alkyl groups represented by $R^1$ and $R^2$ in the above formula (1) include methyl, ethyl, propyl, isopropyl, butyl, isobutyl, sec-butyl, tert-butyl, amyl, isoamyl, sec-amyl, tert-amyl, hexyl, isohexyl, heptyl, octyl, isooctyl, 2-ethylhexyl and tert-octyl. The cycloalkyl groups include cyclopentyl, cyclohexyl and cycloheptyl.

The aryl groups represented by $R^1$ and $R^2$ include phenyl, naphthyl and biphenyl. The alkylaryl groups include 4-methylphenyl, 4-tert-butylphenyl and nonylphenyl. The arylalkyl groups include benzyl, phenethyl and cumyl.

The metal represented by X includes alkali metals such as lithium, sodium and potassium, alkaline earth metals such as magnesium and calcium, and aluminum, zinc and titanium.

In the formula (1), it is preferable that $R^1$ and $R^2$ are each an alkylaryl group, and being a t-butylphenyl group is more preferable.

It is preferable that the metal represented by X is sodium, potassium, rubidium, calcium or barium, and among these, sodium is more preferable. More specifically, it is most preferable that the compound (B) is 2,2'-methylenebis(4,6-di-t-butylphenyl) sodium phosphate represented by the following formula (2).

[Formula 3]

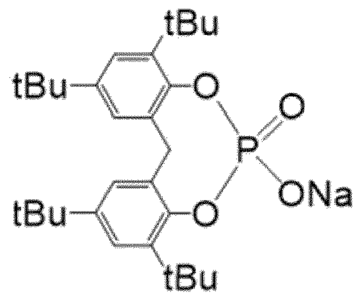

(2)

The phosphoric acid ester complex compound usable as the compound (B) is a complex composed of a metal and an organic compound having a phosphoric acid ester, and a specific structure thereof is not limited. Examples of the organic compound constituting the complex compound include bis(4,4',6,6'-tetra-t-butyl-2,2'-methylene-diphenyl phosphate, 2,2'-methylene-bis(4,6-di-t-butylphenyl) phosphate, 2,2'-methylene-bis(4,6-dimethylphenyl) phosphate, 2,2'-methylene-bis(4,6-dimethylphenyl) phosphate, 2,2'-methylene-bis(4,6-diethylphenyl) phosphate, 2,2'-methylene-bis(4-methyl-6-t-butylphenyl) phosphate, 2,2'-methylene-bis(4-ethyl-6-t-butylphenyl) phosphate, 2,2'-ethylidene-bis(4,6-di-t-butylphenyl) phosphate, 2,2'-ethylidene-bis(4-i-propyl-6-t-butylphenyl) phosphate, 2,2'-ethylidene-bis(4-m-butyl-6-t-butylphenyl) phosphate, 2,2'-butylidene-bis(4,6-dimethylphenyl) phosphate, 2,2'-butylidene-bis(4,6-di-t-butylphenyl) phosphate, 2,2'-t-octylmethylene-bis(4,6-dimethylphenyl) phosphate, 2,2'-t-octylmethylene-bis(4,6-di-t-butylphenyl) phosphate, bis[2,2'-thiobis(4-ethyl-6-t-butylphenyl) phosphate], bis[2,2'-thiobis-(4,6-di-t-butylphenyl) phosphate], bis[2,2'-thiobis-(4-t-octylphenyl) phosphate], bis[2,2'-methylene-bis(4,6-di-t-butylphenyl) phosphate], bis[2,2'-ethylidene-bis(4,6-dit-butylphenyl) phosphate], bis[(4,4'-dimethyl-6,6'-di-t-butyl-2,2'-biphenyl) phosphate], (4,4'-dimethyl-5,6'-dit-butyl-2,2'-biphenyl) phosphate, tris[2,2'-methylene-bis(4,6-di-t-butylphenyl) phosphate], tris[2,2'-ethylidene-bis(4,6-di-t-butylphenyl) phosphate], phenyl bisdodecyl phosphate, phenyl ethyl hydrogen phosphate, phenyl bis(3,5,5-trimethylhexyl) phosphate, ethyl diphenyl phosphate, 2-ethylhexyl di(tolyl) phosphate, diphenyl hydrogen phosphate, methylene diphenyl phosphate, bis(2-ethylhexyl) p-tolyl phosphate, tritolyl phosphate, bis(2-ethylhexyl) phenyl phosphate, di(nonyl) phenyl phosphate, phenyl methyl hydrogen phosphate, di(dodecyl) p-tolyl phosphate, p-tolyl bis(2,5,5-trimethylhexyl) phosphate, 2-ethynylhexyl diphenyl phosphate, tri(butoxyethyl) phosphate, trioctyl phosphate, tricresyl phosphate, cresyl diphenyl phosphate, diethyl chlorophosphate, diphenyl chlorophosphate, diethyl bromophosphate, diphenyl bromophosphate, dimethyl chlorophosphate, phenyl chlorophosphate, trimethyl phosphate, triethyl phosphate, tri-n-butyl phosphate, tridecyl phosphate, triphenyl phosphate, isopropyl triphenyl phosphate, isodecyl diphenyl phosphate and methylene diphenyl phosphate.

Then, examples of the metal constituting the phosphoric acid ester complex compound include aluminum, sodium, lithium, calcium, magnesium and barium. These may be used singly in one kind or in a combination of two or more kinds. Among these, aromatic phosphoric acid esters are preferable; cyclic aromatic phosphoric acid esters are still more preferable; and sodium complex compounds of aromatic cyclic phosphoric acid esters are most preferable.

Among the above-mentioned compounds (B), examples of compounds having a melting point of 300°C or higher include 2,2'-methylenebis(4,6-di-t-butylphenyl) sodium phosphate.

The content of the compound (B) is, with respect to the total amount of the resin (A) and the compound (B), preferably 0.001 to 20 parts by mass. When the content of the compound (B) is too low, it becomes difficult for a covering material to be obtained to be provided with fine cells; and when too high, there arises such a risk that sparks are often generated during molding of an electric wire.

It is preferable that the foam molding composition of the present disclosure further contains boron nitride. Due to containing boron nitride, there is obtained a covering material having fine and uniform cells smaller in average cell size.

The average particle size of the boron nitride is preferably 8.0 μm or larger. Conventionally, the average particle size of boron nitride is likely to be made small and use of boron nitride having a relatively large average particle size has not been studied specifically.

Due to that the foam molding composition of the present disclosure contains boron nitride having an average particle size in the above specific range, there can be formed a foamed electric wire equipped with a covering material having a smaller average cell size and a high foaming ratio.

The average particle size of the boron nitride is more preferably 9.0 μm or larger, still more preferably 10.0 μm or larger, further still more preferably 10.5 μm or larger, especially preferably 11.0 μm or larger, especially more preferably 12.0 μm or larger and most preferably 13.0 μm or larger.

When the average particle size of the boron nitride is too large, there arise such a risk that the average cell size becomes large and such a risk that sparks are often generated. The average particle size of the boron nitride is

preferably 25 μm or smaller and more preferably 20 μm or smaller.

Due to that the average particle size of the boron nitride is in the above range, a covering material having fine and uniform cells can be formed.

The average particle size of the boron nitride is a value determined by using a laser diffraction/scattering particle size distribution analyzer. In the case of using a wet method, a medium may appropriately be selected, but for example, methanol or the like may be used.

The particle size distribution in terms of (D84-D16)/D50 of the boron nitride is preferably 1.2 or lower.

With regard to the particle size distribution, when a cumulative curve is determined with the total volume of a powder mass of the boron nitride being taken to be 100%, D84, D50 and D16 represent, respectively, a particle size (μm) of a point of the cumulative curve which indicates 84%, a particle size (μm) of a point thereof which indicates 50% and a particle size (μm) of a point thereof which indicates 16%. Here, the cumulation of the particle size distribution is carried out from the small particle size side. The total volume of the powder mass can be obtained by preparing a sample in which the powder of the boron nitride is dispersed in a medium such as methanol, and using a laser diffraction/scattering particle size distribution analyzer (for example, Microtrack MT3300, manufactured by Nikkiso Co., Ltd.).

Due to that the particle size distribution of the boron nitride is in the above range, a covering material having fine and uniform cells can be formed and generation of sparks can be suppressed more.

The particle size distribution is more preferably 1.1 or less and still more preferably 1.0 or lower. The lower limit of the particle size distribution is not limited, but may be, for example, 0.1.

The cumulative curve of the particle size distribution (volumetric particle size distribution) is obtained by using a laser diffraction/scattering particle size distribution analyzer (for example, Microtrack MT3300, manufactured by Nikkiso Co., Ltd.). In the case of using a wet method, a medium may appropriately be selected, but for example, methanol or the like may be used.

It is preferable that the boron nitride is a pulverized one. When the boron nitride is a pulverized one, generation of sparks can be suppressed more.

The pulverization can be carried out by a method and condition by which the average particle size and the particle size distribution of the boron nitride can be made to be in the above ranges. The pulverization is carried out by appropriately selecting the kind and the condition of a pulverizer. The pulverizer may be, for example, a jet mill, a hammer mill, a ball mill, a pin mill or the like.

The boron nitride may be regulated to the average particle size or the particle size distribution in the above range by being classified.

The composition of the present disclosure is not limited, but the content of the boron nitride is preferably 0.1 to 10% by mass, more preferably 0.1 to 2.0% by mass, still more preferably 0.1 to 1.5% by mass and further still more preferably 0.1 to 1.0% by mass. When the content of the boron nitride is too low, there arises such a risk that it becomes difficult for a covering material of a foamed electric wire to be obtained to be provided with fine cells; when too high, there arises such a risk that the production cost becomes high.

Alternatively, the foam molding composition of the present disclosure may further contain a polyatomic anion-containing inorganic salt in the range of not impairing the advantageous effects of the present disclosure.

The polyatomic anion-containing inorganic salt includes one disclosed in U.S. Patent No. 4,764,538.

Alternatively, the foam molding composition of the present disclosure may further contain sulfonic acid, phosphonic acid or salts thereof, zeolite and the like in the range of not impairing the advantageous effects of the present disclosure. Further alternatively, there may be used concurrently an organic foam nucleating agent such as ADCA (azodicarbonamide), DPN (N,N'-dinitropentamethylenetetramine) or OBSH (4,4'-oxybisbenzenesulfonylhydrazide).

Alternatively, the foam molding composition of the present disclosure may further contain, other than the resin (A) and the compound (B), conventionally well-known fillers in the range of not impairing the advantageous effects of the present disclosure.

Examples of the fillers include graphite, carbon fiber, coke, silica, zinc oxide, magnesium oxide, magnesium sulfate, tin oxide, antimony oxide, calcium carbonate, magnesium carbonate, glass, talc, mica, aluminum nitride, calcium phosphate, sericite, diatomaceous earth, silicon nitride, fine silica, fumed silica, alumina, zirconia, quartz powder, kaolin, bentonite and titanium oxide. The shape of the filler is not limited, and includes fibrous, needle, powdery, granular, bead shapes and the like. Here, the fillers are different from the boron nitride.

Alternatively, the foam molding composition of the present disclosure may further contain a thermoplastic resin other than the resin (A). Examples of the thermoplastic resin other than the resin (A) include general-purpose resins such as polyethylene resins, polypropylene resins, vinyl chloride resins and polystyrene resins; and engineering plastics such as polyamide (PA), polycarbonate, polybutylene terephthalate (PBT) and silicon resins. Further alternatively, the foam molding composition may contain a thermosetting elastomer and a thermoplastic elastomer.

Alternatively, the foam molding composition of the present disclosure may further contain other components of additives and the like. Examples of the other components include fillers such as glass fiber, glass powder and asbestos fiber, and reinforcing agents, stabilizers, lubricants, pigments, flame retarders and other additives.

The foam molding composition of the present disclosure can also be obtained, for example, by a production method (hereinafter, referred to as "production method of the composition") including a mixing step of mixing the resin (A) and the compound (B) and as required, a boron nitride, fillers, additives and the like to be added to thereby obtain a mixture.

A method of the mixing can use a conventionally well-known method or the like, but a mixing method in which the compound (B) is hardly aggregated is preferable.

The mixing method includes methods using a Henschel mixer, a ribbon mixer, a V blender, a ball mill or the like. The method also includes, for example, a method of mixing by melt kneading.

Alternatively, a production method of the foam molding composition of the present disclosure may be a method including a kneading step of kneading the mixture obtained in the above mixing step. By the kneading, pellets can be obtained. The kneading can be carried out, for example, by a method using a conventionally well-known melt kneader such as a single-screw extruder or a twin-screw extruder.

Each component of the thermoplastic resin other than the above-mentioned resin; the boron nitride; the polyatomic anion-containing inorganic salt; the fillers; the other additives; and the like as already described as being capable of being contained in the foam molding composition of the present disclosure, can appropriately be added in each step of the production method of the foam molding composition according to the property and the like of the each component. Alternatively, a fluororesin and a boron nitride may further be added.

The foam molding composition of the present disclosure can suitably be used as a foaming composition. Further, the foam molding composition can suitably be used as a composition for electric wire covering to form a covering material of an electric wire.

A method for producing a foam molded body of the present disclosure comprises a step of foam molding the foam molding composition.

The method of foam molding the foam molding composition is not limited, and for example, a conventionally well-known method can be used; examples thereof include a method using a continuous gas injection method in which a gas is used in the resin melted (melted resin) and the foam molding composition of the present disclosure is charged in a screw extruder designed for foaming operation.

The gas may be, for example, an inert gas such as chlorodifluoromethane, nitrogen, carbon dioxide, argon, helium or flon, or a mixture thereof; the gas may be introduced as a pressurized gas in the melted resin in the extruder, or may be generated by mixing a chemical foaming agent in the melted resin. The gas is dissolved in the melted resin in the extruder.

The gas dissolved in the melted resin comes out from the melted material by sudden decline of the pressure of the melted material when the melted material comes out from an extrusion die. The extrudate extruded from the extruder is then cooled and solidified, for example, by a method in which the extrudate is introduced in water.

The foam molded body, since being obtained by foam molding the foam molding composition, is low in the dielectric constant, presents a stable outer diameter and is low in the weight, and can provide the shape stable in the size including the wire diameter, the thickness and the like as a covering material described later.

The total volume of cells in the foam molded body can appropriately be regulated according to applications, for example, by regulation of the amount of the gas to be introduced in the extruder, and the like, or by selection of the kind of the gas to be dissolved.

The foam molded body is obtained as a molded body molded according to applications in extrusion from the extruder. The molding method is not limited as long as being thermal melt molding, and examples thereof include extrusion foam molding, injection foam molding and metal mold foam molding.

The shape of the foam molded body is not limited, and can be made into various shapes such as a covering material of the foamed electric wire, filament shapes such as a wire rod or the like, sheet, film, rod and pipe shapes. The foam molded body can be used, for example, as an electric insulating material, a heat insulating material, a sound insulating material, a lightweight structural material such as a floating material, a cushioning material such as a cushion, and the like. Further, the foam molded body can especially suitably be used as a covering material of the foamed electric wire.

The foam molded body to be obtained contains a melted and solidified body of the foam molding composition of the present disclosure and cells, and it is preferable that the cells are homogeneously distributed in the melted and solidified body. The average cell size of the cells is not limited, but is, for example, preferably 100 μm or smaller and more preferably 60 μm or smaller, and is preferably 0.1 μm or larger.

The foaming ratio of the foam molded body is not limited, but is preferably 10% or higher and more preferably 15% or higher. The upper limit of the foaming ratio is not limited, but is, for example, 80%.

Also the point that the surface of the foam molded body of the present disclosure is smoother than that of conventional foam molded bodies is one of features of the foam molded body. Due to that the surface is smooth, the foam molded body can suitably be utilized for foamed members excellent in slidability, and the like.

In the present disclosure, the surface of the foam molded body can be evaluated by scanning the surface by

a bare hand and observing the degree of catching (protrusions) transmitted to the hand at this time. The electric wire surface can also be evaluated numerically, as described later, by measuring an electric wire surface by a laser microscope, carrying out correction in a specified electric wire region of obtained image data by using quadratic curved surface correction as surface shape correction, and thereafter calculating the surface roughness of 500 × 2,000 μm. It is preferable that the surface roughness is smaller than 10.0 μm.

A method for producing an electric wire of the present disclosure includes a step of covering a core wire with the foam molding composition to thereby obtain the electric wire. By using the foam molding composition, there can be formed a foamed electric wire equipped with a covering material having fine and uniform cells. It is preferable that the step of obtaining the electric wire involves foam molding the foam molding composition.

The electric wire obtained by the production method of the electric wire is composed of the covering material formed from the foam molding composition and the core wire. The electric wire obtained by covering the core wire with the foam molding composition is also one aspect in the present disclosure.

The covering material, since being obtained by covering the core wire with the foam molding composition, has fine and uniform cells. The covering material is low in the dielectric constant, presents a stable outer diameter and is low in the weight, and can provide the shape stable in the size including the wire diameter, the thickness and the like.

Further, the covering material has the smooth surface as in the above foam molded body, and exhibits similar physical properties.

The electric wire can be fabricated by a conventionally similar method, except for covering the core wire with the above-mentioned foam molding composition, and can be produced, for example, by using extrusion foam molding. The preferable extrusion condition can appropriately be selected according to the formulation of the composition to be used and the size of the electric wire to be used.

Examples of a method of covering the core wire with the foam molding composition include a method in which the foam molding composition of the present disclosure is charged in a screw extruder designed for foaming operation, while a gas soluble to the melted resin is used and a continuous gas injection method is used. The gas may be the same gas as the gas to be used in the production method of the foam molded body.

The obtained covering material contains a melted and solidified body of the foam molding composition of the present disclosure and cells, and it is preferable that the cells are distributed homogeneously in the melted and solidified body.

The average cell size of the cells is not limited, but is, for example, preferably 200 μm or smaller, more preferably 100 μm or smaller, still more preferably 50 μm or smaller, further still more preferably 40 μm or smaller, especially preferably 30 μm or smaller and further especially preferably 20 μm or smaller. The average cell size is preferably 0.1 μm or larger, more preferably 0.5 μm or larger and more preferably 1 μm or larger.

Such a structure of the covering material is obtained due to a combination of the resin (A) and a specific compound (B) in the foam molding composition of the present disclosure.

The average cell size is a value determined by taking an image of a covering material cross section by a scanning electron microscope (SEM), calculating the diameter of each cell by image processing and averaging the diameters.

The foaming ratio of the covering material is preferably 10% or higher, more preferably 20% or higher, still more preferably 30% or higher and further still more preferably 43% or higher. The upper limit is not limited, but is, for example, 90%. Alternatively, the upper limit of the foaming ratio may be 80%. When the foaming ratio becomes high, cell breaking and cell merging occur and a desired molded article becomes unable to be obtained.

The foaming ratio is a value determined as ((a specific gravity of a resin - a specific gravity of a foam)/the specific gravity of the resin) × 100. The foaming ratio can appropriately be regulated according to applications, for example, by regulation of the amount of the gas to be introduced in the extruder, and the like, or by selection of the kind of the gas to be dissolved.

The number of sparks per 3,500 m of the covering material is preferably less than 5, more preferably less than 3 and still more preferably less than 1.

The number of sparks is a value obtained by measurement at a voltage of 1,500 V by a Beta LaserMike Sparktester HFS1220.

A material of the core wire may be, for example, a metal conductor material such as, silver, copper or aluminum. The material may be a single material, or may be a material plated with silver, tin or the like. Alternatively, carbon may be used as a conductor.

It is preferable that the core wire is one having a diameter of 0.02 to 3 mm. The diameter of the core wire is more preferably 0.04 mm or larger, still more preferably 0.05 mm or larger and especially preferably 0.1 mm or larger. It is more preferable that the diameter of the core wire is 2 mm or smaller. The core wire may be a solid wire, or may also be a twisted wire in which a plurality of core wires are twisted.

It is preferable that the electric wire has a thickness of the covering material of 0.02 to 3.0 mm. It is also preferable that the thickness of the covering material is 2.0 mm or smaller.

The conductor may also have a shape such as a round, flat or rectangular shape.

The foamed electric wire is composed of the core wire and the covering material covering the core wire. The foamed electric wire can suitably be used as cables which connect computers and their peripheral equipment, cables which communicate high capacities of images and sounds at high speed, cables which connect between servers of data centers, for example, LAN cables, USB cables, lightning cables, HDMI(R) cables and QSFP cables, electric wires for aerospace, underground transmission cables, submarine power cables, high-tension cables, superconducting cables, wrapping electric wires, electric wires for cars, wire harnesses and electrical wiring, electric wires for robots and FA, electric wires for OA equipment, electric wires for information devices (optical fiber cables, LAN cables, HDMI(R) cables, lightning cables, audio cables and the like), internal wiring for communication base stations, large-current internal wiring (inverters, power conditioners, battery systems, and the like), internal wiring for electronic devices, wiring for small electronic devices and mobile devices, wiring for moving parts, internal wiring for electric devices, internal wiring for measurement apparatuses, power cables (for construction, wind/solar power generation, and the like), cables for control and instrumentation wiring, cables for motors, and the like.

The electric wire may also have a two-layer structure (skin-foam) in which a non-foamed layer is inserted between the core wire and the covering material, a two-layer structure (foam-skin) in which a non-foamed layer is coated as an outer layer, or a three-layer structure (skin-foam-skin) in which a non-foamed layer is coated as an outer layer of the skin-foam.

The non-foamed layer of the electric wire is not limited, and specifically, may be a resin layer composed of a resin such as polyaryl ether ketone (PAEK) (more specifically, for example, polyether ether ketone (PEEK), polyether ketone ketone (PEKK), polyether ketone (PEK) or polyether ether ketone ketone (PEEKK) and the like), polyphenylene sulfide (PPS), polyether sulfone (PES), liquid crystal polymer (LCP), polysulfone (PSF), amorphous polyarylate (PAR), polyether nitrile (PEN), thermoplastic polyimide (TPI), polyimide (PI), polyether imide (PEI), polyamideimide (PAI), fluororesin or the like.

## Examples

Hereinafter, the present disclosure will be described specifically based on Examples.

In Examples and Comparative Examples, as the resin (A), the following resins (1) to (4) were used.

Resin (1): an aromatic polyether ketone resin/polyether ketone ketone PEKK (MFR: 10 g/10 min, melting point: 335°C, glass transition temperature Tg: 162°C, initial pyrolysis temperature: 520°C)

Resin (2): an aromatic polyether ketone resin/polyether ketone ketone PEKK (MFR: 12 g/10 min, melting point: 356°C, glass transition temperature Tg: 165°C, initial pyrolysis temperature: 501°C)

Resin (3): an aromatic polyether ketone resin/polyether ether ketone PEEK (MFR: 20 g/10 min, melting point: 345°C, glass transition temperature Tg: 143°C, initial pyrolysis temperature: 529°C)

Resin (4): a polyarylene sulfide/polyphenylene sulfide PPS (MFR: 20 g/10 min, melting point: 275°C, glass transition temperature Tg: 90°C, initial pyrolysis temperature: 458°C)

### (Method of molding foamed electric wires)

A single-screw extruder used for extrusion of a foamed insulating layer had a cylinder diameter of 35 mm, an L/D of 32, a die inner diameter of 0.8 mm and a tip outer diameter of 1.50 to 5.0 mm. The single-screw extruder was operated at a cylinder temperature of 280 to 400°C and at a screw rotation speed of 5 to 30 rpm and a resin composition obtained as described above was fed from a hopper. The melted resin composition discharged formed an insulating layer of 0.3 mm to 0.8 mm in thickness on a conductor (diameter: 0.5 mm, cross-sectional area: 0.20 $mm^2$, annealed copper solid wire) to thereby obtain an insulated electric wire. The line speed at this time was set at 20 to 200 m/min. A nitrogen gas was introduced from a central segment C part of the barrel by using a gas injector device and the volume of the nitrogen gas to be introduced was regulated to a target foaming ratio.

Molding of a foamed electric wire was carried out by setting pellets (composition) prepared by melt kneading so as the amount to be added be a predetermined value to an extruder temperature being a temperature shown in Table 2, and adjusting the extrusion temperature, the flow volume (pressure) of a nitrogen gas to be introduced, the extrusion speed and the take-over speed. The electric wire extrusion condition is shown in Table 3.

The molding was carried out continuously for 1 hour, and for 3,000 m where the molding became and remained stable, fluctuation in the wire diameter and sparking-out were observed. Further, for the obtained foamed electric wire, the foaming ratio and the average cell size were measured, and the surface condition was observed and the surface roughness was measured, by the following methods.

For the obtained foamed insulated electric wire, various evaluations were carried out. The results are shown in Table 1.

Example 1

Pellets in which 0.5 part by mass of 2,2'-methylenebis(4,6-di-t-butyphenyl) sodium phosphate (crystal nucleating agent, ADK STAB NA-11, melting point: ≥400°C, manufactured by Adeka Corp.) was added to the resin (1) were subjected to foamed electric wire molding at an extruder rotation speed of 15 rpm, at a flow volume of a nitrogen gas introduced of 11 cc/min and at a take-over speed of 105 m/min to thereby obtain a targeted foamed electric wire having an outer diameter of 1.28 mm. The standard deviation of the variation in the wire diameter gave a good value of 0.011, and the number of sparks gave a very good value of 2. As a result of analysis of the obtained foamed electric wire, the foaming ratio gave a good value of 28% and the average cell size gave a good value of 42 μm; the surface condition was extremely good to touch and the surface roughness gave a very good value of 9.6 μm.

Example 2

Pellets in which 1.0 part by mass of 2,2'-methylenebis(4,6-di-t-butyphenyl) sodium phosphate (crystal nucleating agent, ADK STAB NA-11, manufactured by Adeka Corp.) was added to the resin (1) were subjected to foamed electric wire molding at an extruder rotation speed of 15 rpm, at a flow volume of a nitrogen gas introduced of 17 cc/min and at a take-over speed of 100 m/min to thereby obtain a targeted foamed electric wire having an outer diameter of 1.32 mm. The standard deviation of the variation in the wire diameter gave a good value of 0.012, and the number of sparks gave a very good value of 1. As a result of analysis of the obtained foamed electric wire, the foaming ratio gave a good value of 30% and the average cell size gave a good value of 35 μm; the surface condition was extremely good to touch and the surface roughness gave a very good value of 9.3 μm.

Example 3

Pellets in which 1.0 part by mass of 2,2'-methylenebis(4,6-di-t-butyphenyl) sodium phosphate (crystal nucleating agent, ADK STAB NA-11, manufactured by Adeka Corp.) was added to the resin (2) were subjected to foamed electric wire molding at an extruder rotation speed of 15 rpm, at a flow volume of a nitrogen gas introduced of 15 cc/min and at a take-over speed of 98 m/min to thereby obtain a targeted foamed electric wire having an outer diameter of 1.31 mm. The standard deviation of the variation in the wire diameter gave a good value of 0.014, and the number of sparks gave a very good value of 3. As a result of analysis of the obtained foamed electric wire, the foaming ratio gave a good value of 32% and the average cell size gave a good value of 33 μm; the surface condition was extremely good to touch and the surface roughness gave a very good value of 8.8 μm.

Example 4

Pellets in which 1.0 part by mass of 2,2'-methylenebis(4,6-di-t-butyphenyl) sodium phosphate (crystal nucleating agent, ADK STAB NA-11, manufactured by Adeka Corp.) was added to the resin (3) were subjected to foamed electric wire molding at an extruder rotation speed of 15 rpm, at a flow volume of a nitrogen gas introduced of 14 cc/min and at a take-over speed of 97 m/min to thereby obtain a targeted foamed electric wire having an outer diameter of 1.35 mm. The standard deviation of the variation in the wire diameter gave a good value of 0.015, and the number of sparks gave a very good value of 3. As a result of analysis of the obtained foamed electric wire, the foaming ratio gave a good value of 35% and the average cell size gave a good value of 36 μm; the surface condition was extremely good to touch and the surface roughness gave a very good value of 9.5 μm.

Example 5

Pellets in which 1.0 part by mass of 2,2'-methylenebis(4,6-di-t-butyphenyl) sodium phosphate (crystal nucleating agent, ADK STAB NA-11, manufactured by Adeka Corp.) was added to the resin (4) were subjected to foamed electric wire molding at an extruder rotation speed of 20 rpm, at a flow volume of a nitrogen gas introduced of 10 cc/min and at a take-over speed of 110 m/min to thereby obtain a targeted foamed electric wire having an outer diameter of 1.44 mm. The standard deviation of the variation in the wire diameter gave a good value of 0.017, and the number of sparks gave a very good value of 3. As a result of analysis of the obtained foamed electric wire, the foaming ratio gave a good value of 25% and the average cell size gave a good value of 44 μm; the surface condition was extremely good to touch and the surface roughness gave a very good value of 10.1 μm.

Example 6

Pellets in which 1.0 part by mass of 2,2'-methylenebis(4,6-di-t-butyphenyl) sodium phosphate (crystal nucleating

agent, ADK STAB NA-11, manufactured by Adeka Corp.) was added to a mixture of the resin (1) and the resin (2) in 1 : 1 were subjected to foamed electric wire molding at an extruder rotation speed of 15 rpm, at a flow volume of a nitrogen gas introduced of 15 cc/min and at a take-over speed of 102 m/min to thereby obtain a targeted foamed electric wire having an outer diameter of 1.29 mm. The standard deviation of the variation in the wire diameter gave a good value of 0.011, and the number of sparks gave a very good value of 2. As a result of analysis of the obtained foamed electric wire, the foaming ratio gave a good value of 30% and the average cell size gave a good value of 37 μm; the surface condition was extremely good to touch and the surface roughness gave a very good value of 9.3 μm.

Comparative Example 1

Pellets in which nothing was added to the resin (1) were subjected to foamed electric wire molding at an extruder rotation speed of 15 rpm, at a flow volume of a nitrogen gas introduced of 10 cc/min and at a take-over speed of 70 m/min. Almost no foaming was observed; the outer diameter scattered; and the variation in the electrostatic capacity was very large. No targeted foamed electric wire could be obtained.

Comparative Example 2

Pellets in which 1.0 part by mass of an alumina was added to the resin (3) were subjected to foamed electric wire molding at an extruder rotation speed of 15 rpm, at a flow volume of a nitrogen gas introduced of 12 cc/min and at a take-over speed of 92 m/min to thereby obtain a foamed electric wire having an outer diameter of 1.29 mm. The standard deviation of the variation in the wire diameter gave an unstable value of 0.102, and the number of sparks gave a very bad value of 100 or more. As a result of analysis of the obtained foamed electric wire, the foaming ratio gave a value of 30% and the average cell size gave a large value of 82 μm; the surface condition was poor and the surface roughness gave a bad value of 16.4 μm.

Various properties in the present description were measured by the following methods.

(Pyrolysis temperature)

The pyrolysis temperature of a resin was defined as a 1%-weight loss temperature when the resin was heated in air at 10°C/min by TG (weight change measurement by heating). The measurement was carried out by using a differential thermogravimetric simultaneous measuring apparatus. TG/DTA6300, manufactured by Seiko Instruments Inc.

(Melting point)

The melting point of a resin was defined as a temperature corresponding to a peak when the measurement was carried out at a temperature-increasing rate of 10°C/min by using an RDC220 (manufactured by Seiko Instruments Inc.).

The melting point of a resin was determined as a temperature corresponding to the local maximum value in a heat-of fusion curve when the temperature was increased at a rate of 10°C/min by using a differential scanning calorimetry (DSC) device.

(Glass transition temperature (Tg))

The glass transition temperature was measured according to JIS K7121 by using a differential scanning calorimetry (DSC) device under the measurement condition of a temperature-increasing rate of 20°C/min.

(MFR)

The MFR of a resin was measured according to ASTM D1238 by using a KAYENESS Melt Indexer Series 4000 (manufactured by Yasuda Seiki Seisakusho, Ltd.) and by using a die of 2.1 mm in diameter and 8 mm in length. In the case of a PAEK resin, the MFR was defined as a value by the measurement at 380°C and at a load of 5 kg; and in the case of a PPS resin, the MFR was defined as a value by the measurement at 315°C and at a load of 5 kg.

(Outer diameter)

The outer diameter of an electric wire was measured by using a LASER MICRO DIAMETER LDM-303H-XY (manufactured by Takikawa Engineering Co., Ltd.).

(The number of sparks)

The number of sparks per 3,500 m was measured by using a Beta LaserMike Sparktester HFS1220 at a voltage of 1,500 V.

(Foaming ratio)

The foaming ratio was determined as ((a specific gravity of a resin − a specific gravity of a foam)/the specific gravity of the resin) × 100.

(Average cell size)

The average cell size was determined by taking a SEM image of an electric wire cross section, calculating the diameter of each cell by image processing, and averaging the diameters.

(Surface condition)

The surface condition was evaluated by scanning the surface of a covered electric wire by a bare hand and evaluating the degree of catching (protrusions) transmitted to the hand at this time.

Good: there was no catching, or a little catching
Bad: there was considerable catching.

(Surface roughness)

The electric wire surface was measured by a laser microscope, manufactured by Keyence Corp.; there was carried out correction in a specified electric wire region of obtained image data by using quadratic curved surface correction as surface shape correction; and thereafter, the surface roughness of 500 × 2,000 μm was calculated.

[Table 1]

| | | Example 1 | Example 2 | Exampl e3 | Example 4 | Example 5 | Example 6 | Comparative Example 1 | Comparative Example 2 |
|---|---|---|---|---|---|---|---|---|---|
| Resin A | | Resin 1 | Resin 1 | Resin 2 | Resin 3 | Resin 4 | Resin 1/ Resin 2 | Resin 1 | Resin 3 |
| Compound B | | NA-11 | NA-11 | NA-11 | NA-11 | NA-11 | NA-11 | none | alumina |
| Amount added | parts by mass | 0.5 | 1.0 | 1.0 | 1.0 | 1.0 | 1.0 | none | 1.0 |
| Rotation Speed of Extruder | rpm | 15 | 15 | 15 | 15 | 20 | 15 | 15 | 15 |
| Take-over speed | m/min. | 105 | 100 | 98 | 97 | 110 | 102 | 70 | 92 |
| Volume of gas introduced | cc/min. | 11 | 17 | 15 | 14 | 10 | 15 | 10 | 12 |
| Outer Diameter after covering | mm | 1.28 | 1.32 | 1.31 | 1.35 | 1.44 | 1.29 | unstable | 1.29 |
| Conductor Diameter | mm | 0.5 | 0.5 | 0.5 | 0.5 | 0.5 | 0.5 | 0.5 | 0.5 |
| Standard Deviation of Variation in Outer Diameter | | 0.011 | 0.012 | 0.014 | 0.015 | 0.017 | 0.011 | | 0.102 |
| Spark | Number of sparks | 2 | 1 | 3 | 3 | 3 | 2 | | 100 or more |
| Foaming Ratio | % | 28 | 30 | 32 | 35 | 25 | 30 | | 30 |
| Average Cell Size | µm | 42 | 35 | 33 | 36 | 44 | 37 | | 82 |
| Surface Condition | - | good | good | good | good | good | good | bad | bad |
| Surface Roughness | µm | 9.6 | 9.3 | 8.8 | 9.5 | 10.1 | 9.3 | | 16.4 |

[Table 2]

| Table 2 | | |
|---|---|---|
| C1 | °C | 280~340 |
| C2 | °C | 310~380 |
| C3 (Gas introduction) | °C | 340~400 |
| C4 | °C | 340~400 |
| C5 | °C | 340~400 |
| H1 | °C | 340~400 |
| H2 | °C | 330~400 |
| Die | °C | 330~400 |

[Table 3]

| Table 3 | |
|---|---|
| Size of Extruder | ϕ35 mm |
| Inner Diameter of Die | 0.8 mm |
| Outer Diameter of Tip | 1.5~5.0 mm |
| Rotation Speed of Screw | 5-30 rpm |
| Conductive Wire (Core Wire) | 0.5 mm |
| Pressure of Nitrogen | 10-35 MPa |
| Flow Volume of Nitrogen | 5~30 cc/min. |

Industrial Applicability

The foam molding composition of the present disclosure is suitable, in particular, as a material for forming a covering material of a foamed electric wire.

## Claims

1. A foam molding composition, comprising: a resin (A) having a pyrolysis temperature of 330°C or higher; and at least one compound (B) selected from the group consisting of phosphoric acid esters and salts thereof and phosphoric acid ester complex compounds.

2. The foam molding composition according to claim 1, wherein the resin (A) has a dielectric constant of 4.0 or lower.

3. The foam molding composition according to claim 1 or 2, wherein the resin (A) is capable of being melt processed.

4. The foam molding composition according to claim 1, 2 or 3, wherein the resin (A) has a melting point of 250°C or higher.

5. The foam molding composition according to claim 1, 2, 3 or 4, wherein the resin (A) is at least one selected from the group consisting of polyphenylene sulfide (PPS) and polyaryl ether ketone (PAEK).

6. The foam molding composition according to claim 1, 2, 3, 4 or 5, wherein the compound (B) has a melting point of 300°C or higher.

7. The foam molding composition according to claim 1, 2, 3, 4, 5 or 6, wherein the compound (B) is an aromatic cyclic phosphoric acid ester salt represented by the following formula (1):

[Formula 1]

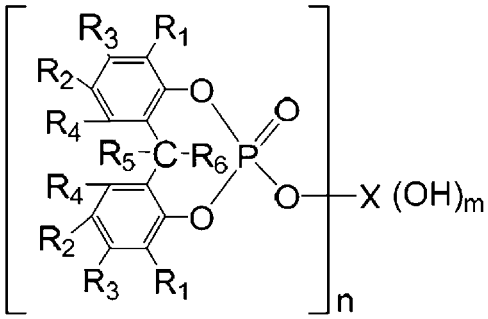

(1)

wherein $R^1$, $R^2$, $R^3$ and $R^4$ each represent a hydrogen atom, an alkyl group or cycloalkyl group having 1 to 8 carbon atoms, or an aryl group, alkylaryl group or arylalkyl group having 6 to 12 carbon atoms; $R^5$ and $R^6$ each represent a hydrogen atom or a methyl group; n represents an integer of 1 or 2; m represents an integer of 0 to 2; and X represents a m+n-valent metal.

**8.** The foam molding composition according to claim 7, wherein $R^1$ and $R^2$ in the formula (1) are a t-butyl group.

**9.** The foam molding composition according to claim 7 or 8, wherein X in the formula (1) is sodium.

**10.** The foam molding composition according to claim 7, 8 or 9, wherein the compound (B) is 2,2'-methylenebis(4,6-di-t-butylphenyl) sodium phosphate.

**11.** A foam molded body, being obtained from the foam molding composition according to claim 1, 2, 3, 4, 5, 6, 7, 8, 9 or 10.

**12.** The foam molded body according to claim 11, wherein the foam molded body has a foaming ratio of 10% or higher.

**13.** An electric wire, comprising a core wire and a covering material covering the core wire and obtained from the foam molding composition according to claim 1, 2, 3, 4, 5, 6, 7, 8, 9 or 10.

**14.** The electric wire according to claim 13, wherein the covering material has a foaming ratio of 10% or higher.

**15.** A method for producing a foam molded body, comprising foam molding the foam molding composition according to claim 1, 2, 3, 4, 5, 6, 7, 8, 9 or 10.

**16.** A method for producing an electric wire, comprising covering a core wire with the foam molding composition according to claim 1, 2, 3, 4, 5, 6, 7, 8, 9 or 10 to obtain the electric wire.

**INTERNATIONAL SEARCH REPORT**

International application No.
**PCT/JP2021/027647**

**A. CLASSIFICATION OF SUBJECT MATTER**

***C08K 5/521***(2006.01)i; ***C08L 81/06***(2006.01)i; ***C08L 101/12***(2006.01)i; ***C08J 9/04***(2006.01)i; ***C08L 71/08***(2006.01)i; ***H01B 13/14***(2006.01)i; ***H01B 7/02***(2006.01)i
FI: C08J9/04 107; C08K5/521; C08L71/08; C08L81/06; C08L101/12; H01B7/02 G; H01B13/14 B; C08J9/04 CEZ

According to International Patent Classification (IPC) or to both national classification and IPC

**B. FIELDS SEARCHED**

Minimum documentation searched (classification system followed by classification symbols)

C08K5/521; C08L81/06; C08L101/12; C08J9/04; C08L71/08; H01B13/14; H01B7/02

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 110591331 A (HANGZHOU BOSTE NEW MATERIAL TECHNOLOGY CO., LTD.) 20 December 2019 (2019-12-20) claims, paragraphs [0071], [0073] | 1-5, 11-12, 15 |
| A | | 6-10, 13-14, 16 |
| A | US 2019/0144627 A1 (IMERYS TALC AMERICA, INC.) 16 May 2019 (2019-05-16) claims, paragraph [0057] | 1-16 |
| A | JP 2013-147566 A (MITSUI CHEMICALS, INC.) 01 August 2013 (2013-08-01) paragraphs [0002], [0017], [0053]-[0068] | 1-16 |
| A | JP 2008-174752 A (DAIKIN INDUSTRIES, LTD.) 31 July 2008 (2008-07-31) claims | 1-16 |
| A | JP 2016-160416 A (HITACHI METALS, LTD.) 05 September 2016 (2016-09-05) claims | 1-16 |
| A | US 2019/0169391 A1 (CABLE COMPONENTS GROUP, LLC) 06 June 2019 (2019-06-06) claims | 1-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 October 2021** | **19 October 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2021/027647

C. DOCUMENTS CONSIDERED TO BE RELEVANT

| Category* | Citation of document, with indication, where appropriate, of the relevant passages | Relevant to claim No. |
|---|---|---|
| A | WO 2011/118717 A1 (FURUKAWA ELECTRIC CO., LTD.) 29 September 2011 (2011-09-29) claims | 1-16 |

Form PCT/ISA/210 (second sheet) (January 2015)

**INTERNATIONAL SEARCH REPORT**
**Information on patent family members**

International application No.
**PCT/JP2021/027647**

| Patent document cited in search report | Publication date (day/month/year) | Patent family member(s) | Publication date (day/month/year) |
|---|---|---|---|
| CN 110591331 A | 20 December 2019 | (Family: none) | |
| US 2019/0144627 A1 | 16 May 2019 | WO 2017/189128 A1<br>EP 3448924 A1 | |
| JP 2013-147566 A | 01 August 2013 | (Family: none) | |
| JP 2008-174752 A | 31 July 2008 | US 2004/0198886 A1<br>claims<br>WO 2003/000792 A1<br>CN 1639254 A | |
| JP 2016-160416 A | 05 September 2016 | (Family: none) | |
| US 2019/0169391 A1 | 06 June 2019 | WO 2019/109073 A2<br>claims<br>EP 3717550 A2 | |
| WO 2011/118717 A1 | 29 September 2011 | US 2013/0014971 A1<br>claims<br>EP 2551858 A1<br>CN 102812524 A<br>KR 10-2013-0006617 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013147566 A
- JP 2017157463 A
- WO 2011118717 A
- JP 11130892 A
- US 4764538 A